# EUROPEAN PATENT SPECIFICATION

(11) **EP 2 429 092 B1**
(45) Date of publication and mention of the grant of the patent: **14.02.2018**
(21) Application number: 10176646.7
(22) Date of filing: 14.09.2010
(51) Int. Cl.: H04B 3/54, H05B 37/02

(54) **A METHOD FOR COMMUNICATING AMONG A PLURALITY OF TWO-WIRE CONTROL DEVICES IN AN AC INSTALLATION, SUCH TWO-WIRE CONTROL DEVICES, AND METHOD FOR CONTROLLING SUCH AN INSTALLATION.**
VERFAHREN ZUR KOMMUNIKATION ZWISCHEN MEHREREN ZWEIDRAHTSTEUERVORRICHTUNGEN IN EINER WECHSELSTROMINSTALLATION, DERARTIGE ZWEITDRAHTSTEUERVORRICHTUNGEN SOWIE VERFAHREN ZUR STEUERUNG EINER DERARTIGEN INSTALLATION
PROCÉDÉ DE COMMUNICATION PARMI PLUSIEURS DISPOSITIFS DE CONTRÔLE À DEUX FILS DANS UNE INSTALLATION CA, CES DISPOSITIFS DE CONTRÔLE À DEUX FILS ET PROCÉDÉ DE CONTRÔLE D'UNE TELLE INSTALLATION

(43) Date of publication of application: 14.03.2012
(73) Proprietor: Schneider Electric Industries SAS, 92500 Rueil-Malmaison (FR)
(72) Inventor: Nielsen, Poul Erik Normann, 2765, Smørum (DK); Johannsen, Michal, 2605, Brøndby (DK)
(74) Representative: Awapatent A/S

(56) References cited:
- EP-A2- 1 158 841
- WO-A2-2005/124477
- US-A1- 2008 258 650

## Description

The present invention relates to a method for communicating among a plurality of two-wire control devices in an AC installation, more specifically in an AC installation, in which said two-wire control devices are arranged in parallel with each other and in series with a consumer to be controlled. The present invention furthermore relates to a two-wire control device adapted to be connected to the phase of the AC installation and to a supply lead for the consumer. Also the present invention relates to a method for controlling the supply to the consumer in the AC installation.

In AC installations it is quite usual that a consumer, such a lamp, needs to be controllable from a number of spatially separate locations using a corresponding number of control devices, such as e.g. light switches arranged at either end and possibly also along the length of a corridor, allowing persons to switch on the light when they enter the corridor and switch it of again when they leave the corridor. Large meeting rooms may also have several entrances. In order to avoid switching the light on -and in particular off manually, the AC installation may also be equipped with motion sensors such as Passive Infrared Detectors (PIDs) instead of or in addition to manually operated switches.

However, if a single consumer, such as a lamp, is to be controlled by several control devices at spatially separate locations, some kind of communication or signaling needs to take place in order to ensure that the different control devices are in the correct state. That is to say, if a number single two-wire control device, e.g. one-pole switches, are connected in parallel with each other and in series with the consumer, the consumer will be switched on as soon an one control device is activated, and cannot be switched off unless all control devices are deactivated, which is evidently against the purpose of having several control devices. It must be possible for the consumer to be switched on by any desirable one of the control devices and off by anyone of the control devices, including the currently active one, irrespective of which control device was originally used to switch the consumer on, and vice versa.

In order to minimize the number of electrical wires which have to be drawn from the control devices to the consumer, e.g. avoiding separate signaling lines, it is desired to use two-wire switches inserted between the phase lead and a supply lead to the consumer, which in turn is connected to the consumer. Rather than introducing entirely different means such as wireless communication or the like, it is desired to make use of the existing wires for signaling. An example of prior art can be found in WO2005/124477.

When for this, two-wire electronic switches are used, the two-wire switches must be self-contained, i.e. the electronics and control circuitry therein for switching or interrupting the consumer being supplied via the two wires. This in turn, provides an inherent problem in communication to the active one from any one of the other control devices desiring to take over the control, because the currently active control device effectively short circuits itself most of the active time, but as will be explained below not all of it. Even a control device which acts as an on/off switch, does not have a 100 percent duty cycle because it has to charge its internal power supply via the two wires, and is not possible once it has short circuited itself.

On this background it is the object of the present invention to provide a signaling method, a two-wire control device and a method for controlling the supply to the consumer, according to the opening paragraph, which fulfills these needs.

According to a first aspect of the invention, this object is achieved by a method for communicating among a plurality of two-wire control devices in an AC installation, in which said two-wire control devices are arranged in parallel with each other and in series with a consumer, and in which said two-wire control devices are power supplied via said two wires during a predetermined charge period of each AC cycle in said AC installation, wherein the communication is effected by shortening the duration of said charge period of one of the two-wire control devices with respect to said predetermined charge period when that specific control device is activated, and detecting in the other control devices said shortened charge period.

Thereby signalling between and power supply to a plurality of control devices coupled in parallel via existing wires becomes possible. This, in turn, allows any one of them to take the control of the supply to the consumer, and instruct the remainder to switch off. In other words the invention makes use of the fact such self-contained two-wire control devices are not at a 100 percent duty cycle but in fact uses a small fraction of the AC cycle to charge the internal power supply. A shortening of the duration of this period is detectable by any other two-wire control device coupled in parallel, as it will also be in a charging period.

According to a second aspect of the invention, this object is achieved by a two-wire control device for an AC installation adapted to be connected to the phase of the AC installation and to a supply lead for a consumer to be controlled, the consumer, in turn, being connected to neutral of the AC installation, said two-wire control device comprising, an activation means adapted to receive an activation input, a power supply adapted to be charged during a predetermined charging period via a charging circuit by a current flowing from said phase to the supply lead and through the consumer to neutral or vice versa, a controller supplied by said power supply, a solid state switch connected to said phase of the AC installation and to said supply lead for the consumer to be controlled in parallel with said charging circuit, a voltage detector adapted to detect a reduction in the voltage drop between said phase and said supply lead, means for determining whether the reduction in the voltage drop occurs prior to the expiry of said predetermined charging period, and means for interpreting one or more such reductions in the voltage drop occurring in consecutive AC cycles as an instruction.

Thereby a two-wire control device, which is self-contained and capable of signaling to corresponding self-contained control devices, including a currently active one in an AC installation is provided.

According to a third aspect of the invention, this object is achieved by a method for controlling the supply to a consumer in an AC installation, comprising the steps of providing plurality of two-wire control devices connected in parallel with each other to the phase of the AC installation and to a supply lead for a consumer to be controlled, the consumer, in turn, being connected to neutral of the AC installation, each two-wire control device comprising, a power supply adapted to be charged during a predetermined charging period via a charging circuit by a current flowing from said phase to the supply lead and through the consumer to neutral or vice versa, an activation means adapted to receive an activation input, a solid state switch connected to said phase of the AC installation and to said supply lead for the consumer to be controlled in parallel with said charging circuit, a voltage detector adapted to detect a reduction in the voltage drop between said phase and said supply lead, means for determining whether the reduction in the voltage drop occurs prior to the expiry of said predetermined charging period, and means for interpreting one or more such reductions in the voltage drop occurring in consecutive AC cycles as an instruction, producing a reduction in the voltage drop in one of the two-wire control devices by activation of the solid state switch prior to expiry of the predetermined charging period, detecting the reduction in the voltage drop in the remainder of the two-wire control devices of said plurality of two-wire control devices and determining whether the reduction in the voltage drop occurs prior to the expiry of said predetermined charging period, interpreting one or more such reductions in the voltage drop occurring in consecutive AC cycles as an instruction, and carrying out the corresponding instruction in the reminder of the two-wire control devices of said plurality of two-wire control devices.

Thereby it becomes possible to control an AC consumer by means of plurality of self-contained control devices coupled in parallel via existing wires becomes, thereby allowing any one of them to take the control of the supply to the consumer, and instruct the remainder to switch off.

According to a preferred embodiment of the first aspect of the invention, the control devices detect zero-crossing of the AC and uses the zero-crossing as a timing reference for the detection of the shortened duration of the charge period in one of the other control devices. Using the zero-crossing as a reference is advantageous because in a parallel connection of a plurality of control devices connected in series with a common load, the zero-crossing will be concurrent for all of them, thus proving a good common reference.

According another preferred embodiment of the first aspect of the invention, the duration of the charge period is shortened in a number of consecutive AC cycles. Using signaling in consecutive AC cycles provides several advantages. One advantage being that redundant signaling in two consecutive intervals is more robust to external electromagnetic influence. Using further periods such as three or more even allows more complicated signaling, such as temporary deactivation of other control devices. Using several such periods makes use of the fact that according to standards for such self-contained two-wire switches, their internal power supply must be capable of withstanding a power interruption of at least 10 AC cycles.

According to a further preferred embodiment of the first aspect of the invention, the shortened duration of the charge period is detected by a reduction in voltage drop over the two-wire control device, prior to an expected reduction in voltage drop at the end of the predetermined charge period. This is advantageous in that signaling takes place during a period where all of the control devices are able to receive a signal, irrespective of whether they are active in controlling the consumer or not.

According to a preferred embodiment of the second aspect of the invention, the instruction is to switch off said solid state switch until an input is received by said activation means. This allows an activated control device to switch off all the other control devices, including the currently active one.

According to a further preferred embodiment of the second aspect of the invention, the controller is adapted to switch on said solid state switch before expiry of the predetermined charging period, when an activation command is received.

According to another embodiment of the second aspect of the invention, the activation means is adapted to receive a manual input. This is advantageous in that manual control is provided, which in turn allows override of other activation means such as a Passive Infrared Detector. Consequently, according to a further preferred embodiment of the second aspect of the present invention, the activation means may be adapted to receive an input from an infrared detector.

According to yet a further preferred embodiment of the second aspect of the invention, the controller is adapted to switch off the control device after a predetermined timeout period after activation of said activation means. This allows the control device to automatically switch of the consumer after a predetermined period after manual activation or activation by a Passive Infrared Detector.

According to yet another preferred embodiment of the second aspect of the invention, the controller is adapted to suppress activation signals for a predetermined suspension period after said voltage detector detects a reduction in the voltage drop between said phase and said supply lead. This prevents automatic activation of a control device, such as a Passive Infrared Detector, which has purposely been switched off by a command from another control device, e.g. in order to switch off the light and leave a room in dark during a projection session, or fade the light if the control device is a dimmer.

According to a preferred embodiment of the third aspect of the invention the instruction is to switch off said solid state switch in the two-wire control device until an input is received by said activation means of that specific two-wire switch. This is advantageous because any recipient of the instruction simply stops supplying AC current to the consumer, thereby effectively hands over the control of the consumer to the latest activated control device.

According to a particularly preferred embodiment of the third aspect of the invention, when an activation command is received, the solid state switch is switched on prior to the expiry of said predetermined charging period. This is an efficient way of signaling, because all of the intended recipients of the signaling are capable of receiving during this period.

According to another preferred embodiment of the third aspect of the invention, the solid state switch is switched of after a predetermined timeout period after said activation command has been received. This allows the consumer to be switched off after a while when not needed. In case of a light, as the consumer, this could e.g. be if it has been forgotten to switch off the light manually or if no presence of persons are detected by a Passive Infrared Detector.

The invention will now be explained in greater detail based on non-limiting exemplary embodiments, and with reference to the drawings, on which:
Fig. 1 is a schematic diagram of two-wire control devices in an AC installation according to the invention,
Fig. 2 is a schematic diagram of a control device according to the invention,
Fig. 3 is a timing diagram showing voltage over the control devices according to the invention as well as the zero-cross detector output, and
Fig. 4 is sequence diagram illustrating the operation of two control devices according to the invention, each with a Passive infrared detector and a manual operating member.

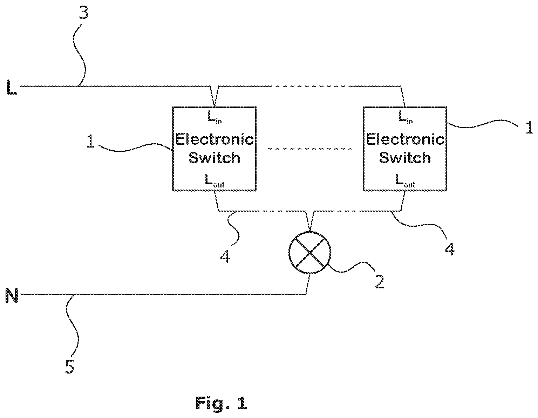

Turning first to Fig. 1, a schematic diagram with two two-wire control devices 1 and a consumer 2 is shown. The control devices 1 may comprise electronic on/off switches, operated manually or automatically, or dimmers or the like. The control devices 1 are connected in parallel with each other between an AC phase 3 and the supply lead(s) 4 to a consumer 2 such as a lamp, which, in turn, is connected to the neutral lead 5 of the AC installation. The consumer 2 thus forms a series connection with the control devices. As indicated by the broken lines there may be a plurality of control devices 1 coupled in parallel, e.g. in order to control the consumer 2 from many different locations. As far as the consumer 2 goes, it will be clear to the person skilled in the art that, even though represented by at single lamp, the consumer 2 may comprise several loads coupled together in parallel or in series with each other, e.g. a number of lamps coupled in parallel in order to be switched on and off together in a room.

As already mentioned, in such a configuration it is desirable to have only one of the control devices 1 supplying the current to the consumer at any given time. Whenever activating one of the control devices 1 it is therefore desirable to signal to any of the remainder of the plurality of control devices, including the currently active one, if any, to stop supplying the consumer. However, since the currently active control device 1 is basically short circuited when supplying the load, signaling to that control device 1 via the only two existing wires is difficult and requires specific measures.

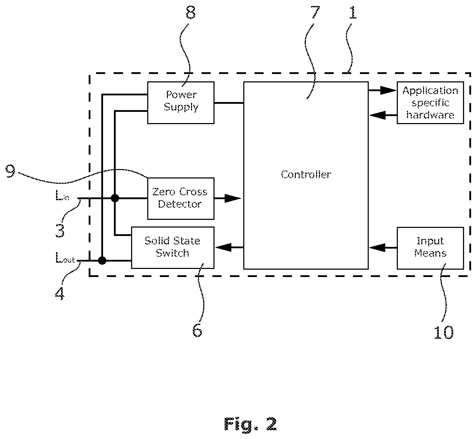

Turning now to Fig. 2, a schematic diagram of a control device 1 according to the invention is illustrated. The control device 1 comprises a solid state switch 6 such as a TRIAC, a FET or the like able to make and break the connection between the input terminal connected to the phase 3 of the AC installation and the output terminal connected to the supply lead 4 to the consumer in the AC installation. The switching times of the solid state switch 6 is controlled by a controller 7, such as a microprocessor, and ASIC, an FPGA or other logic circuits, including ones built from discrete components, allowing the solid state switch 6 to be switched on at a given time during the half periods of the AC cycles, and depending on the type of solid state switch 6 possibly also to be switched off. Some types of solid state switches 6, such as TRIACs, will, however, remain switched on until next zero-crossing. Using different switch-on times it is possible for the controller 7 to operate the solid state switch both as an on/off switch and as a dimmer. Since the solid state switch 6 effectively short circuits the entire control device, the control device needs to have an internal power supply 8 for supplying *inter alia* the controller during the time when the solid state switch 6 short circuits the control device. In fact standards specify that the power supply should be able to supply the control device 1 during a power loss of 10 AC cycles, corresponding to 200 ms at 50 Hz, cf. EN/IEC 60669-2-1 clause 26.1.1. The power supply 8 is charged by an integral charging circuit during a period of the AC cycle where the controller inhibits the switching on of the solid state switch 6, typically by delaying the switch-on time of the solid state switch 6 by a predetermined duration, with respect zero-crossing detected by a voltage detector, such as a zero-cross detector 9. The zerocross detector may serve the dual functions of detecting zero-cross and the reduction in voltage drop caused by another control device 2. Separate means for the two different detections may of course also be provided. Implementing such circuits is well within the reach of the person skilled in the art. Likewise, the actual layout of the power supply 8 and the charging circuit are not relevant as such for the person skilled in the art, e.g. the charging circuit need not be integral with the power supply 8. Important, however, is the fact that the charging circuit forms a parallel connection with the solid state switch 6. The controller may be controlled by appropriate input means 10 providing an activation signal to the controller 7. The input means could be a manually operated switch providing a switch-on or switch-off signal to the controller 7, it could be a sliding or turning potentiometer for setting and activating a dimmer at a desired level, or it could be a Passive Infrared Detector activating the controller upon detection of motion in a room. Other activation means are also well possible, e.g. a timer, a temperature sensor, etc. If a Passive Infrared Detector is used, the controller preferably also controls a timeout period, where it, if for a predetermined time no presence is detected, stops switching on the solid state switch 6.

The incorporation of one type of input means in the control device 1 does not exclude that other types and several different input means may be present in the control device 1. Thus the control device 1 could have all three of: dimmer control, on/off switch and Passive Infrared Detection built into it.

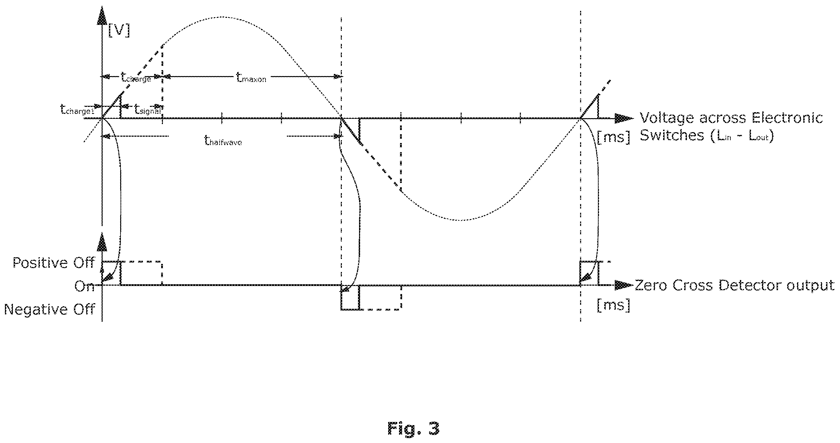

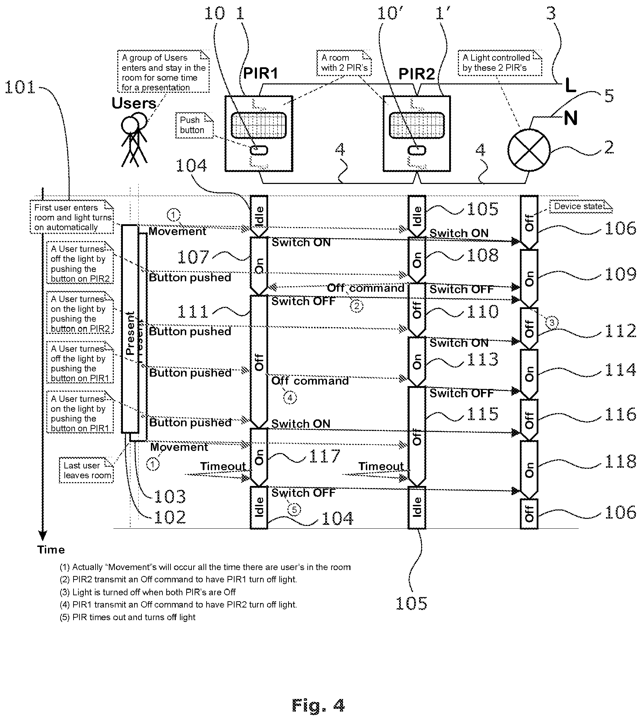

Turning now to Fig. 3 a timing diagram outlining in the upper half the voltage drop across a solid state switch 6 during slightly more than a full AC cycle, and in the lower half the output of the zero-cross detector 9. If a plurality of corresponding control devices are coupled in parallel as illustrated in Fig. 1 and Fig. 4, this voltage over the solid state switch 6 will in fact be identical to all of them, as they are coupled in series with the same consumer. Looking first at the broken line it is assumed that one of the control devices 1 is active, and consequently the voltage drop over the control device 1 is reduced to zero after a predetermined charge period t_{charge} of the power supply 8, when the controller 7 switches on the solid state switch 6. Looking then at the fully drawn line it is assumed that one of the control devices 1 has been activated and consequently wishes to signal to the others that it is taking over the control of the supply to the consumer, and that the others should consequently deactivate, i.e. their controllers should keep their respective solid state switches 6 switched off. Here the activated control device 1 reduces the charging time for its power supply by switching on the solid state switch 6 at a time t_{charge1} after zero-crossing, which is prior to the predetermined charging time t_{charge} by the duration t_{signal}. Since the control devices 1 are connected in parallel with each other and in series with the same consumer 2, the charging time of the remainder of the plurality of control devices 1 is in fact also reduced, but in practice this is not a problem as they are all designed to be capable of withstanding a full power loss for 10 consecutive AC cycles.

According to the invention the controllers 7 of each of the control 1 devices are adapted to detect this reduction in voltage drop occurring prior to what is expected, as a signal and interpret this as an instruction, e.g. to deactivate itself and leave the control of the power supply to the signaling one of the control devices. It should be noted that because all which a receiving control device 1 has to do, is to become deactivated, or remain so if already deactivated, it is unimportant for an individual one receiving the instruction, which one of the others is actually taking over.

Though in principle, the production and detection of one single early reduction in voltage drop suffices for signaling a deactivation signal to the remainder, it is preferred to have the signaling one of the control devices 1 reducing the charge period in at least two consecutive AC cycles in order to reduce influence and false detections from external electromagnetic sources. Using signaling in several consecutive AC cycles may also be used to signal more complicated messages, than just deactivation, e.g. signaling Passive Infrared Detectors a timeout period, where automatic activation is suspended. Signaling in consecutive AC cycles is, however, only a preferred embodiment, and evidently signaling could also be performed in both consecutive AC half cycles or spaced apart AC cycles, e.g. every second or third AC cycle. The latter options would allow the power supply 8 to recharge between each signal part. In this respect it should be noted that when two or more Passive Infrared Detectors are monitoring the same area, it is basically not a problem if they are both active at that same, i.e. current is supplied to the load via both. As to timeout periods, all Passive Infrared Detectors preferably have a predetermined timeout period, after which they switch off and stop supplying the consumer 2, so as to e.g. automatically turn of light in an unoccupied room.

Turning now to Fig. 4, an exemplary implementation of the invention e.g. for controlling the lighting in a conference room, is shown at the top. Two control devices 1 according to the invention embodiment are arranged in the same configuration as in Fig. 1, i.e. in parallel to commonly control a consumer, exemplified by the lamp lighting the room. In the example the two control devices 1 are identical, each of the control devices 1 having two activation means, namely a Passive Infrared Detector for automatically switching on the light whenever persons are present in the room, as well as a manual pushbutton 10, 10' for switching off and on the light manually. The two control devices 1, 1' are located spaced apart, e.g. located at two different entrances to the room, or in different corners thereof so as to allow the Passive Infrared Detectors to monitor the room for the presence of persons.

In the lower part of Fig. 4 a sequence of actions and communications for each of the involved parties, i.e. the persons, the two control devices 1, 1' and the consumer 2. The vertical boxes represents states over time, which elapses downwardly in the figure. Some boxes are arrow like, with pointed ends. These pointed ends of the boxes represent transition time between states.

The room is thought to have been unoccupied for a long time, and the control devices 1, 1' thus in an idle state waiting for activation but not supplying the consumer 2.

In box 101 two users enter the room, leading to a state of presence illustrated by the respective boxes 102 and 103 illustrating that the presence is slightly staggered so that the first user's presence represented by box 102 starts a little earlier in that the other user's presence illustrated by box 103. In the example illustrated, they leave in the same order, so that presence of users is detectable until the bottom of box 103. At this time both control devices 1, 1' are idle as illustrated by boxes 104 and 105, just using their Passive Infrared Detectors to monitor the presence of users in the room, but switched off as such and not supplying the consumer, as illustrated by box 106. The Passive Infrared Detectors of both of the control devices 1. 1' concurrently detects the presence of the first user in box 102 and switch on as illustrated by boxes 107 and 108 and are thus both supplying the consumer which accordingly goes to an on state, as illustrated in box 109.

During the presence of the users in the room the light needs to be switched off, e.g. during a presentation using a projector. At this stage a user presses the pushbutton 10' on the control device 1' on the right-hand side of Fig. 4 to switch off the light. The control device 1' of which the push-button 10' was pressed switches to the off state illustrated in box 110, and signals a command to the other control device 1 by reducing the voltage drop between the phase 3 and the supply lead 4 in an appropriate number of consecutive AC cycles. Receiving this command the other control device 1 also goes to the off state, as illustrated in box 111, and stops supplying the load. At this point the consumer 2 is no longer supplied by any of the control devices 1, 1' and enters the off state illustrated by box 112.

After a while a user presses again the push button 10' of the control device 1' on the right hand side of Fig. 4, and the control device 1' switches back on supplying the consumer in box 113, so that the consumer 2 is on in box 114. In the specific embodiment where the control device 1' is a Passive Infrared Detector it is not necessary to signal, because the Passive Infrared Detectors are autonomous per se, and several of them may be switched on at the same time effectively leaving the control of the consumer to the last Passive Infrared detector to switch off.

Still later a user again turns off the light. This time by pressing the push-button 10 of the control device 1 on the left-hand side of Fig. 4. This control device 1 is still off and thus remains in the off state illustrated in box 111. However, despite the fact that it is in the on state illustrated in box 113 the other control device 1' is, due to the signaling using a reduction in voltage drop according to the invention, able to receive a signal which it can interpret as an off command so as to switch off and not supply the consumer 2, as illustrated in box 115, the consumer 2 thus entering an off state as illustrated in box 116. After a while, just before the users leave the room the push-button 1 of the control device 10 is pressed again to turn on the light, and in box 117 the first control device 1 switches back on and starts supplying the consumer 2, which, in box 118, consequently also goes on.

The light now being back on, the users leave the room without manually turning the light off again, and after the last user leaves his presence ceases in box 103, and no presence is detected any more by the Passive Infrared Detectors of the control devices 1, 1'. With a built-in timeout period controlled e.g. by the controller, the control devices 1, 1' will after a while return to the initial idle states in boxes 104, 105 illustrated at the bottom of Fig. 4 but corresponding to those at the top, and stop supplying the consumer which the returns to the off state in box 106.

Though the above description uses signaling in a predetermined charging period at the beginning of the AC cycle the skilled person will understand that the charge cycle could also be at the end of an AC cycle. However, as zero-cross detection is used, it is currently preferred to use a charge cycle following immediately after the zero-crossing, rather than having detection in a charge period immediately prior to a zero-crossing, which has not yet taken place and must therefore be estimated based on knowledge about earlier AC zero-crossings.

## Claims

1. A method for communicating among a plurality of two-wire control devices (1, 1') in an AC installation, in which said two-wire control devices (1, 1') are arranged in parallel with each other and in series with a consumer (2), and in which said two-wire control devices (1, 1') are power supplied via said two wires during a predetermined charge period of each AC cycle in said AC installation, **characterized in that** the communication is effected by
shortening the duration of said charge period of one of the two-wire control devices with respect to said predetermined charge period when that specific control device (1, 1') is activated, and
detecting in the other control device (1, 1') said shortened charge period.

2. A method according to claim 1, wherein the control devices (1, 1') detect zero-crossing of the AC and uses the zero-crossing as a timing reference for the detection of the shortened duration of the charge period in one of the other control devices (1, 1').

3. A method according to any one of the preceding claims, wherein the duration of the charge period is shortened in a number of consecutive AC cycles.

4. A method according to any one of the preceding claims, wherein said shortened duration of the charge period is detected by a reduction in voltage drop over the two-wire control device, prior to an expected reduction in voltage drop at the end of the predetermined charge period.

5. A two-wire control device (1, 1') for an AC installation adapted to be connected to the phase (3) of the AC installation and to a supply lead (4) for a consumer (2) to be controlled, the consumer (2), in turn, being connected to neutral (5) of the AC installation, said two-wire control device (1, 1') **characterized in** comprising,
an activation means (10, 10') adapted to receive an activation input,
a power supply (8) adapted to be charged during a predetermined charging period via a charging circuit by a current flowing from said phase (3) to the supply lead (4) and through the consumer (2) to neutral (5) or vice versa,
a controller (7) supplied by said power supply,
a solid state switch (6) connected to said phase (3) of the AC installation and to said supply lead (4) for the consumer (2) to be controlled in parallel with said charging circuit,
a voltage detector (9) adapted to detect a reduction in the voltage drop between said phase (3) and said supply lead (4),
means for determining whether the reduction in the voltage drop occurs prior to the expiry of said predetermined charging period, and
means for interpreting one or more such reductions in the voltage drop occurring in consecutive AC cycles as an instruction.

6. A two-wire control device (1, 1') according to claim 5, wherein the instruction is to switch off said solid state switch (6) until an input is received by said activation means (10, 10').

7. A two-wire control device (1, 1') according to claim 5, wherein the controller (7) is adapted to switch on said solid state switch (6) before expiry of the predetermined charging period, when an activation command is received.

8. A two-wire control device (1, 1') according to any one of claims 5-7, wherein the activation means (10, 10') is adapted to receive a manual input.

9. A two-wire control device (1, 1') according to any one of claims 5-8, wherein the activation means (10. 10') is adapted to receive an input from an infrared detector.

10. A two-wire control device (1, 1') according to any one of claims 5-9, wherein the controller (7) is adapted to switch off the control device (1) after a predetermined timeout period after activation of said activation means (10. 10').

11. A two-wire control device (1, 1') according to claim 9, wherein the controller (7) is adapted to suppress activation signals for a predetermined suspension period after said voltage detector detects a reduction in the voltage drop between said phase (3) and said supply lead (4).

12. A method for controlling the supply to a consumer (2) in an AC installation, comprising the steps of
providing plurality of two-wire control devices (1, 1') connected in parallel with each other to the phase (3) of the AC installation and to a supply lead (4) for a consumer (2) to be controlled, the consumer (2), in turn, being connected to neutral (5) of the AC installation, each two-wire control device (1, 1') comprising, a power supply (8) adapted to be charged during a predetermined charging period via a charging circuit by a current flowing from said phase (3) to the supply lead (4) and through the consumer (2) to neutral (5) or vice versa, an activation means (10, 10') adapted to receive an activation input, a solid state switch (6) connected to said phase (3) of the AC installation and to said supply lead (4) for the consumer (2) to be controlled in parallel with said charging circuit, a voltage detector (9) adapted to detect a reduction in the voltage drop between said phase (3) and said supply lead (4), means for determining whether the reduction in the voltage drop occurs prior to the expiry of said predetermined charging period, and means for interpreting one or more such reductions in the voltage drop occurring in consecutive AC cycles as an instruction, **characterized in** the further step of
producing a reduction in the voltage drop in one of the two-wire control devices (1,1') by activation of the solid state switch (6) prior to expiry of the predetermined charging period,
detecting the reduction in the voltage drop in the remainder of the two-wire control devices (1, 1') of said plurality of two-wire control (1, 1') devices and determining whether the reduction in the voltage drop occurs prior to the expiry of said predetermined charging period,
interpreting one or more such reductions in the voltage drop occurring in consecutive AC cycles as an instruction, and
carrying out the corresponding instruction in the reminder of the two-wire control devices (1, 1') of said plurality of two-wire control (1, 1') devices.

13. A method according to claim 12, wherein the instruction is to switch off said solid state switch (6) in the two-wire control device (1, 1') until an input is received by said activation means of that specific two-wire control device (1, 1').

14. A method according to claim 12 or 13, wherein, when an activation command is received, the solid state switch (6) is switched on prior to the expiry of said predetermined charging period.

15. A method according to claims 14, wherein the solid state switch (6) is switched of after a predetermined timeout period after said activation command has been received.

## Patentansprüche

1. Verfahren zur Kommunikation zwischen mehreren Zweidrahtsteuervorrichtungen (1, 1') in einer Wechselstrominstallation, in der die Zweidrahtsteuervorrichtungen (1, 1') parallel zueinander und in Serie mit einem Abnehmer (2) angeordnet sind und in der die Zweidrahtsteuervorrichtungen (1, 1') über die zwei Drähte während einer vorbestimmten Ladeperiode jedes Wechselstromzyklus in der Wechselstrominstallation mit Strom versorgt sind, **dadurch gekennzeichnet, dass** die Kommunikation getätigt wird durch Verkürzen der Dauer der Ladeperiode einer der Zweidrahtsteuervorrichtungen in Bezug auf die vorbestimmte Ladeperiode, wenn die bestimmte Steuervorrichtung (1, 1') aktiviert ist, und Erfassen der verkürzten Ladeperiode in der anderen Steuervorrichtung (1, 1').

2. Verfahren nach Anspruch 1, wobei die Steuervorrichtungen (1, 1') einen Nulldurchgang des Wechselstroms erfassen und den Nulldurchgang als eine Zeiteinteilungsreferenz für die Erfassung der verkürzten Dauer der Ladeperiode in einer der anderen Steuervorrichtungen (1, 1') verwenden.

3. Verfahren nach einem der vorangehenden Ansprüche, wobei die Dauer der Ladeperiode in einer Zahl von aufeinanderfolgenden Wechselstromzyklen verkürzt ist.

4. Verfahren nach einem der vorangehenden Ansprüche, wobei die verkürzte Dauer der Ladeperiode durch eine Spannungsabfallminderung über die Zweidrahtsteuervorrichtung vor einer erwarteten Spannungsabfallminderung am Ende der vorbestimmten Ladungsperiode erfasst wird.

5. Zweidrahtsteuervorrichtung (1, 1') für eine Wechselstrominstallation, die angepasst ist, mit der Phase (3) der Wechselstrominstallation und einer zu steuernden Versorgungsleitung (4) für einen Abnehmer (2) verbunden zu sein, wobei der Abnehmer (2) wiederum mit einem Nullleiter (5) der Wechselstrominstallation verbunden ist, wobei die Zweidrahtsteuervorrichtung (1, 1') **dadurch gekennzeichnet ist, dass** sie umfasst:
ein Aktivierungsmittel (10, 10'), das angepasst ist, eine Aktivierungseingabe zu empfangen,
eine Stromversorgung (8), die angepasst ist, während einer vorbestimmten Ladeperiode durch Strom, der von der Phase (3) zur Versorgungsleitung (4) und durch den Abnehmer (2) zum Nullleiter (5) oder umgekehrt fließt, über einen Ladeschaltkreis geladen zu werden,
ein Steuergerät (7), das durch die Stromversorgung versorgt ist,
ein Festkörperschalter (6), der mit der Phase (3) der Wechselstrominstallation und der zu steuernden Versorgungsleitung (4) für den Abnehmer (2) parallel mit dem Ladeschaltkreis verbunden ist,
einen Spannungsdetektor (9), der angepasst ist, eine Spannungsabfallminderung zwischen der Phase (3) und der Versorgungsleitung (4) zu erfassen,
Mittel zum Ermitteln, ob die Spannungsabfallminderung vor dem Ablauf der vorbestimmten Ladeperiode auftritt, und
Mittel zum Interpretieren einer oder mehrerer solcher Spannungsabfallminderungen, die in aufeinanderfolgenden Wechselstromzyklen auftreten, als eine Anweisung.

6. Zweidrahtsteuervorrichtung (1, 1') nach Anspruch 5, wobei die Anweisung ist, den Festkörperschalter (6) auszuschalten, bis eine Eingabe durch das Aktivierungsmittel (10, 10') empfangen wird.

7. Zweidrahtsteuervorrichtung (1, 1') nach Anspruch 5, wobei das Steuergerät (7) angepasst ist, den Festkörperschalter (6) vor dem Ablauf der vorbestimmten Ladeperiode einzuschalten, wenn ein Aktivierungsbefehl empfangen wird.

8. Zweidrahtsteuervorrichtung (1, 1') nach einem der Ansprüche 5-7, wobei das Aktivierungsmittel (10, 10') angepasst ist, eine manuelle Eingabe zu empfangen.

9. Zweidrahtsteuervorrichtung (1, 1') nach einem der Ansprüche 5-8, wobei das Aktivierungsmittel (10, 10') angepasst ist, eine Eingabe von einem Infrarotdetektor zu empfangen.

10. Zweidrahtsteuervorrichtung (1, 1') nach einem der Ansprüche 5-9, wobei das Steuergerät (7) angepasst ist, die Steuervorrichtung (1) nach einer vorbestimmten Auszeitperiode nach Aktivierung des Aktivierungsmittels (10, 10') auszuschalten.

11. Zweidrahtsteuervorrichtung (1, 1') nach Anspruch 9, wobei das Steuergerät (7) angepasst ist, Aktivierungssignale für eine vorbestimmte Aussetzperiode zu unterdrücken, nachdem der Spannungsdetektor eine Spannungsabfallminderung zwischen der Phase (3) und der Versorgungsleitung (4) erfasst hat.

12. Verfahren zur Steuerung der Versorgung eines Abnehmers (2) in einer Wechselstrominstallation, umfassend die Schritte
Bereitstellen mehrerer Zweidrahtsteuervorrichtungen (1, 1'), die parallel zueinander mit der Phase (3) der Wechselstrominstallation und einer zu steuernden Versorgungsleitung (4) für einen Abnehmer (2) verbunden sind, wobei der Abnehmer (2) wiederum mit einem Nullleiter (5) der Wechselstrominstallation verbunden ist, wobei jede Zweidrahtsteuervorrichtung (1, 1') eine Stromversorgung (8), die angepasst ist, während einer vorbestimmten Ladeperiode durch Strom, der von der Phase (3) zur Versorgungsleitung (4) und durch den Abnehmer (2) zum Nullleiter (5) oder umgekehrt fließt, über einen Ladeschaltkreis geladen zu sein, ein Aktivierungsmittel (10, 10'), das angepasst ist, eine Aktivierungseingabe zu empfangen, einen Festkörperschalter (6), der mit der Phase (3) der Wechselstrominstallation und der zu steuernden Versorgungsleitung (4) für den Abnehmer (2) parallel mit dem Ladeschaltkreis verbunden ist, einen Spannungsdetektor (9), der angepasst ist, eine Spannungsabfallminderung zwischen der Phase (3) und der Versorgungsleitung (4) zu erfassen, Mittel zum Ermitteln, ob die Spannungsabfallminderung vor dem Ablauf der vorbestimmten Ladeperiode auftritt, und Mittel zum Interpretieren einer oder mehrerer solcher Spannungsabfallminderungen, die in aufeinanderfolgenden Wechselstromzyklen auftreten, als eine Anweisung, umfasst, **gekennzeichnet durch** den weiteren Schritt
Produzieren einer Spannungsabfallminderung in einem der Zweidrahtsteuervorrichtungen (1, 1') durch Aktivierung des Festkörperschalters (6), vor Ablauf der vorbestimmten Ladeperiode,
Erfassen der Spannungsabfallminderung in den übrigen Zweidrahtsteuervorrichtungen (1, 1') der mehreren Zweidrahtsteuervorrichtungen (1, 1') und Ermitteln, ob die Spannungsabfallminderung vor dem Ablauf der vorbestimmten Ladeperiode auftritt,
Interpretieren einer oder mehrerer solcher Spannungsabfallminderungen, die in aufeinanderfolgenden Wechselstromzyklen auftreten, als eine Anweisung, und
Ausführen der entsprechenden Anweisung in den übrigen Zweidrahtsteuervorrichtungen (1, 1') der mehreren Zweidrahtsteuervorrichtungen (1, 1').

13. Verfahren nach Anspruch 12, wobei die Anweisung ist, den Festkörperschalter (6) in der Zweidrahtsteuervorrichtung (1, 1') auszuschalten, bis eine Eingabe durch das Aktivierungsmittel dieser bestimmten Zweidrahtsteuervorrichtung (1, 1') empfangen wird.

14. Verfahren nach Anspruch 12 oder 13, wobei, wenn ein Aktivierungsbefehl empfangen wird, der Festkörperschalter (6) vor dem Ablauf der vorbestimmten Ladeperiode eingeschaltet wird.

15. Verfahren nach Anspruch 14, wobei der Festkörperschalter (6) nach einer vorbestimmten Auszeitperiode, nachdem der Aktivierungsbefehl empfangen wurde, ausgeschaltet ist.

## Revendications

1. Procédé de communication entre une pluralité de dispositifs de commande à deux fils (1, 1') dans une installation en courant alternatif (CA), dans laquelle lesdits dispositifs de commande à deux fils (1, 1') sont disposés en parallèle les uns avec les autres et en série avec un consommateur (2), et dans laquelle lesdits dispositifs de commande à deux fils (1, 1') sont alimentés en énergie par le biais desdits deux fils pendant une période de charge prédéterminée de chaque cycle de courant alternatif dans ladite installation en courant alternatif, **caractérisé en ce que** la communication est effectuée
en écourtant la durée de ladite période de charge de l'un des dispositifs de commande à deux fils par rapport à ladite période de charge prédéterminée lorsque ce dispositif de commande spécifique (1, 1') est activé et
en détectant dans l'autre dispositif de commande (1, 1') ladite période de charge écourtée.

2. Procédé selon la revendication 1, dans lequel les dispositifs de commande (1, 1') détectent un passage par zéro du courant alternatif et utilisent le passage par zéro comme référence de synchronisation pour la détection de la durée écourtée de la période de charge dans l'un des autres dispositifs de commande (1, 1').

3. Procédé selon l'une quelconque des revendications précédentes, dans lequel la durée de la période de charge est écourtée en un nombre de cycles de courant alternatif consécutifs.

4. Procédé selon l'une quelconque des revendications précédentes, dans lequel ladite durée écourtée de la période de charge est détectée par une réduction de la chute de tension sur le dispositif de commande à deux fils avant une réduction attendue de la chute de tension à la fin de la période de charge prédéterminée.

5. Dispositif de commande à deux fils (1, 1') pour une installation en courant alternatif conçu pour être raccordé à la phase (3) de l'installation en courant alternatif et à un fil d'alimentation (4) d'un consommateur (2) qui doit être contrôlé, le consommateur (2) étant, à son tour, raccordé au neutre (5) de l'installation en courant alternatif, ledit dispositif de commande à deux fils (1, 1') étant **caractérisé en ce qu'**il comprend :
un moyen d'activation (10, 10') conçu pour recevoir une entrée d'activation,
une alimentation électrique (8) conçue pour être chargée pendant une période de charge prédéterminée par le biais d'un circuit de charge par un courant circulant depuis ladite phase (3) jusqu'au fil d'alimentation (4) et, par le consommateur (2), jusqu'au neutre (5) ou vice versa,
un régulateur de charge (7) alimenté par ladite alimentation électrique,
un commutateur à semi-conducteurs (6) raccordé à ladite phase (3) de l'installation en courant alternatif et audit fil d'alimentation (4) du consommateur (2) qui doit être contrôlé, en parallèle avec ledit circuit de charge,
un détecteur de tension (9) conçu pour détecter une réduction de la chute de tension entre ladite phase (3) et ledit fil d'alimentation (4),
un moyen pour déterminer si la réduction de la chute de tension se produit avant l'expiration de ladite période de charge prédéterminée et
un moyen pour interpréter une ou plusieurs pareilles réductions de la chute de tension se produisant dans des cycles de courant alternatif consécutifs comme étant une instruction.

6. Dispositif de commande à deux fils (1, 1') selon la revendication 5, dans lequel l'instruction consiste à désactiver ledit commutateur à semi-conducteurs (6) jusqu'à ce qu'une entrée soit reçue par ledit moyen d'activation (10, 10').

7. Dispositif de commande à deux fils (1, 1') selon la revendication 5, dans lequel le régulateur de charge (7) est conçu pour activer ledit commutateur à semi-conducteurs (6) avant l'expiration de la période de charge prédéterminée lorsqu'une commande d'activation est reçue.

8. Dispositif de commande à deux fils (1, 1') selon l'une quelconque des revendication 5 à 7, dans lequel le moyen d'activation (10, 10') est conçu pour recevoir une entrée manuelle.

9. Dispositif de commande à deux fils (1, 1') selon l'une quelconque des revendication 5 à 8, dans lequel le moyen d'activation (10, 10') est conçu pour recevoir une entrée d'un détecteur infrarouge.

10. Dispositif de commande à deux fils (1, 1') selon l'une quelconque des revendication 5 à 9, dans lequel le régulateur de charge (7) est conçu pour désactiver le dispositif de commande (1) après une période de temporisation prédéterminée après une activation dudit moyen d'activation (10, 10').

11. Dispositif de commande à deux fils (1, 1') selon la revendication 9, dans lequel le régulateur de charge (7) est conçu pour supprimer des signaux d'activation pendant une période de suspension prédéterminée après que ledit détecteur de tension détecte une réduction de la chute de tension entre ladite phase (3) et ledit fil d'alimentation (4).

12. Procédé pour réguler l'alimentation jusqu'à un consommateur (2) dans une installation en courant alternatif, comprenant les étapes consistant :
à fournir une pluralité de dispositifs de commande à deux fils (1, 1') raccordés en parallèle les uns avec les autres à la phase (3) de l'installation en courant alternatif et à un fil d'alimentation (4) d'un consommateur (2) qui doit être contrôlé, le consommateur (2) étant, à son tour, raccordé au neutre (5) de l'installation en courant alternatif, chaque dispositif de commande à deux fils (1, 1') comprenant : une alimentation électrique (8) conçue pour être chargée pendant une période de charge prédéterminée par le biais d'un circuit de charge par un courant circulant depuis ladite phase (3) jusqu'au fil d'alimentation (4) et, par le consommateur (2), jusqu'au neutre (5) ou vice versa, un moyen d'activation (10, 10') conçu pour recevoir une entrée d'activation, un commutateur à semi-conducteurs (6) raccordé à ladite phase (3) de l'installation en courant alternatif et audit fil d'alimentation (4) du consommateur (2) qui doit être contrôlé, en parallèle avec ledit circuit de charge, un détecteur de tension (9) conçu pour détecter une réduction de la chute de tension entre ladite phase (3) et ledit fil d'alimentation (4), un moyen pour déterminer si la réduction de la chute de tension se produit avant l'expiration de ladite période de charge prédéterminée et un moyen pour interpréter une ou plusieurs pareilles réductions de la chute de tension se produisant dans des cycles de courant alternatif consécutifs comme étant une instruction, caractérisé en l'étape supplémentaire consistant
à produire une réduction de la chute de tension dans l'un des dispositifs de commande à deux fils (1,1') par activation du commutateur à semi-conducteurs (6) avant l'expiration de la période de charge prédéterminée,
à détecter la réduction de la chute de tension dans le reste des dispositifs de commande à deux fils (1, 1') de ladite pluralité de dispositifs de commande à deux fils (1, 1') et à déterminer si la réduction de la chute de tension se produit avant l'expiration de ladite période de charge prédéterminée,
à interpréter une ou plusieurs pareilles réductions de la chute de tension se produisant dans des cycles de courant alternatif consécutifs comme étant une instruction et
à exécuter l'instruction correspondante dans le reste des dispositifs de commande à deux fils (1, 1') de ladite pluralité de dispositifs de commande à deux fils (1, 1').

13. Procédé selon la revendication 12, dans lequel l'instruction consiste à désactiver ledit commutateur à semi-conducteurs (6) dans le dispositif de commande à deux fils (1, 1') jusqu'à ce qu'une entrée soit reçue par ledit moyen d'activation de ce dispositif de commande à deux fils spécifique (1, 1').

14. Procédé selon la revendication 12 ou 13, dans lequel, lorsqu'une commande d'activation est reçue, le commutateur à semi-conducteurs (6) est activé avant l'expiration de ladite période de charge prédéterminée.

15. Procédé selon la revendication 14, dans lequel le commutateur à semi-conducteurs (6) est désactivé après une période de temporisation prédéterminée après que ladite commande d'activation a été reçue.
